# EUROPEAN PATENT SPECIFICATION

(11) **EP 1 629 718 B1**
(45) Date of publication and mention of the grant of the patent: **05.11.2008**
(21) Application number: 04020379.6
(22) Date of filing: 27.08.2004
(51) Int. Cl.: A23G 9/32

(54) **Frozen confection and holding device**
Eiskonfekt und Haltemittel
Confiserie glacée et dispositif de support

(43) Date of publication of application: 01.03.2006
(73) Proprietor: Nestec S.A., 1800 Vevey (CH)
(72) Inventor: Capelle, Martine, 80112 Villers-Faucon (FR); Dufort, Christian, 24300 Nontron (FR); Attia, Mohamed Adel, 60000 Beauvais (FR)
(74) Representative: Elleby, Gudrun

(56) References cited:
- EP-A- 1 285 585
- EP-A- 1 397 959
- DE-U- 9 407 785
- GB-A- 2 324 021
- NL-C- 1 013 501
- US-A- 5 324 527
- US-A- 5 993 870

## Description

### Field of the invention

The present invention relates to novel ice confectionery products and to a method for preparing them.

More particularly the invention relates to a frozen confection holding device which dispenses an edible liquid filling from a reservoir, comprised within the holding device, upon consumption of the frozen confection and a composite frozen confection comprising such a holding device.

### Background of the invention

A hollow straw for holding a frozen confectionery block is known from US-A-2 036 706 with the objective of lowering it into a glass of beverage, e.g. soda water and the beverage thereby made into an ice cream soda variety of drink for sucking through the straw. The hollow straw is projecting through the frozen confectionery block and may be closed at one or both of its ends.

A candy sucker with a liquid dispensing assembly is known from US-A-5 324 527, wherein the sucker type candy has channels through which the liquid filling which is pushed out of a plastic housing passes and oozes out at the top of the candy.

It is an object of the invention to provide a frozen stick bar that is particularly attractive first to children secondly to adults in that it offers a fun and unique added senses-stimulus to the enjoyment of frozen dessert novelties upon consumption. This senses-stimulus is in the form of a unique visual effect and eating experience such as a fountain of liquid syrup, sauce, drink or mousse which may flow out from the top on and around the stick bar.

An frozen confection with a hollow rigid stick is known from DE 9 407 785 U. The stick may contain a food product or a toy.

### Summary of the invention

The invention thus comprises a holding device for a frozen confection in the form of a stick container filled with a dessert component that is liquid at low negative temperature,
wherein the stick container is closed by a closure element or a closure mechanism which can be an intermediate or a final closure, edible or non-edible and wherein the stick container is capable of dispensing the dessert component on the surface of the frozen confection by reducing the internal volume of the stick container after removal of the closure element or opening the closure mechanism

The invention further relates to a composite frozen confection comprising:
- a frozen confection holding device in the form of a stick container filled with a dessert component that is liquid at low negative temperature and wherein said stick container is capable of dispensing the dessert component by variation of its internal volume, and
- a body of frozen confection which is supported by the stick filled with the dessert component and in which the stick is anchored.

The invention further relates to methods of manufacture of a composite frozen confection as described above.

The invention further relates to a method for dispensing a liquid dessert component over and around the surface of a frozen confection.

### Detailed description of the invention

In the invention the stick container is an elongated hollow element and may be made of flexible but rigid food grade nonedible material or edible material or a combination of these materials. The nonedible materials preferably include plastics such as polypropylene or polyethylene. The stick container has to be warm to touch. The hollow element preferably has a bulb part which serves as a container for the liquid which is to be dispensed and may be a flexible pouch or balloon or a rigid plastic container of any material. Thus the holding device may comprise one, two or three or more parts which may be assembled together in the case of several parts.

The plastic stick container could be made in one part by any conventional forming method such as injection molding, injection blow molding, thermoforming, extrusion blow molding, injection extrusion or a combination of these forming methods. It may also be in two or three or more parts so as to comprise a hollow tube connected to and assembled with a flexible pouch or balloon. In another embodiment the hollow plastic stick may comprise a tube containing a slidable plunger, such as for example a syringe or be a collapsible telescopic tube. In still a further embodiment the holding device for the frozen confection may comprise a two pieces stick container comprising a hollow tube which is a part in a packaging envelope of the product which is formed of two cavities, one containing the flowable liquid dessert and the other serving as a mold for the frozen confection.

An edible material for the stick container may comprise any coated or uncoated sugar and / or chocolate confectionery such as for example a liquorice, a chewing gum, a chocolate coated hard candy, a pastry, a chocolate coated biscuit tube.

The stick container may also be a combination of such edible and nonedible parts as described therein.

The stick container may present a closure element or mechanism which could be an intermediate or a final closure, edible or non-edible.

In the invention the dessert component may be a sauce, a syrup, a jelly, honey, an alcohol, a carbonated or fizzy drink, a mousse.

Preferred dessert components are formulated to have specific rheological and mechanical properties. Preferred dessert components present particularly reduced freezing / melting temperatures that are sufficiently low that the said dessert is liquid at low negative temperatures and ready to be expressed in tasting at exit of the cabinet freezer.

Preferred dessert components present a Melting Temperature Range (Measurement by Differential Scanning Calorimetry (DSC), Cristallisation - Melting Isotherm Tests) of -16 to -40° C , more preferably from -20 to -35° C Preferred dessert components present mechanical properties that does not show or shows low dilatation-contraction properties in an extended range of temperatures preferably from +20 to -40° C.

Moreover, preferred dessert components have a fluidity at negative temperature allowing to create a flow of the liquid over the surface of the frozen confection upon consumption. The dessert viscosity is dependant on the combination stick-sauce used and on the exit internal diameter of the stick.
Preferred dessert composition present a viscosity range of 1 to 400 Pa.s, preferably 1 to 100 Pa.s, at a negative temperature of -20° C and a shear rate of 100 s-1, measured with a rheometer PHYSICA MCR 300.
To determine the Shear Viscosity a Rheometer PHYSICA MCR 300 is used with a Cone - Plate Geometry with a 50 mm diameter plate. The viscosity was measured at a temperature of -20°C, using a Shear rate of 100 s-1.

A suitable sauce or syrup preferably contains by weight:
- 0 to 20 % water and more preferably 0 to 10% water,
- 30 to 95%, preferably 55 to 95% and more preferably 70 to 95% carbohydrates,
- 0 to 20 % flavour preparation,
- 0 to 2 % natural flavour,
- 0 to 1 % colour,
- 0 to 1% stabilizer / emulsifier.

The dessert component contains one carbohydrate or a mix of carbohydrates. Carbohydrates include any polymer of glucose (dextrose) and / or fructose including sucrose and starch / inuline hydrolysates as invert sugar, glucose, maltose, fructose syrups from any origin, any polymer or derivate such as polydextrose, oligosaccharides.

The term carbohydrates in the present invention does not include sugar alcohols such as sorbitol, xylitol, mannitol, maltitol or other polyol compounds such as glycerol or propylene glycol. The term carbohydrates further does not include substances as Maltodextrins which are integrated in ingredients to optimize the rheological properties.

The dessert component may contain in addition any ingredient or combination of ingredients which act as freezing point depressing agent which may preferably be chosen from glycerol, sorbitol, xylitol, mannitol, maltitol, lactitol, erythritol. Nevertheless according to a preferred embodiment of this invention, the use of sugar alcohols is limited, due to off-taste brought when used at high concentration, to undesirable laxative effet and to limits of the regulatory legislation.
Minor amounts of sugar alcohols, less than 5% could nevertheless be included in the product of this invention.

The dessert component may also contain any ingredient or combination of ingredients which allow to optimize its rheological properties and viscosity, to values as indicated therein which may be stabilizers, gelling agents, thickening agents and/or emulsifiers.

As flavouring preparation, the dessert component may contain natural flavouring preparations such as fruit puree, fruit pulp, fruit concentrate, alcohol, alcoholised fruit, coffee, cocoa, drink, milk based preparation, mousse, fudge, aromatic herbs, seeds, spices or any material or combination of materials having an aromatising function.

As flavour, the dessert component may contain natural flavours, natur identic flavours on any support. As colourant the dessert component may contain any food grade colouring substance or additive or any ingredient having a colouring function.

The dessert component may additionally contain any inclusions: dry inclusions, coated dry inclusions, coated wet inclusions which are not soluble in it and are capable of being dispensed on the surface of the body of frozen confection together with the liquid to produce a specific visual aspect.
with examples of fruit, nuts, grains or part of them, chocolate or sugar confectionery, cereals.

In the context of the inventon, the body of frozen confection may be an ice cream, a premium ice cream, a water ice, a milk ice, a sherbet, a frozen yogurt or any form of frozen confection.

The body of frozen confection may contain any inclusions or pieces: dry inclusions, coated dry inclusions, coated wet inclusions.

The body of frozen confection may be obtained by moulding, extrusion or any known freezing technology.

The invention further relates to a method for the manufacture of a composite frozen confection as decribed therein which comprises:
- providing a first internal cavity and a second external cavity in a packaging plastic material by thermoforming,
- providing a hollow tube inside the internal cavity ,
- filling the first cavity with the liquid dessert component,
- filling the second cavity with a composition to be frozen,
- sealing by means of heat or other sealing mechanisms the outer thermoformed layers to close both cavities,
- freezing the packaged product.

Another method for the manufacture of a composite frozen confection of the invention as described therein comprises:
- providing an internal cavity in a packaging plastic material by thermoforming, blow- or injection molding or any other production mechanism,
- filling the cavity with the liquid desert component,
- closing one side of the cavity by means of heat or other sealing mechanisms or by using a second component that is fixed on one side of the cavity, whereas the other side of the cavity is closed by the frozen confection,
- freezing the packaged product.

The frozen confection can be manufactured in any shape and can conform to any known or imagined form. Thus it can represent a volcano, any human or animal or vegetal figure, a clown, a monster for example.

The association of a stick container with a liquid dessert component can produce a visual effect which can be a flow effect on the frozen confection surface, like a volcano; a hair effect over a clown face; a product expansion by effervescence on the surface of the frozen confection; a dispersion of solid additions at the surface of the frozen confection or a combination of the above effects.

Dispensing of the liquid dessert component over and around the surface of the frozen confection may be effected by squeezing the stick container, by pushing a plunger, by using a telescopic stick to collapse, by screwing or twisting a closure of the stick, by turning a stick part, by blowing, sucking or by using heat transfer, by eating an edible stick part or any combinaison of these methods.

### Examples

The present invention will be further understood from the following detailed examples and description taken in conjunction with the drawings in which parts and percentages are by weight unless stated otherwise.

In the drawings:
Figures 1 and 2 and example 1 show a moulded frozen stick bar comprising a tube and a container providing a volcano effect on consumption;
Figures 3 and 4 and example 2 show an extruded frozen stick bar showing a clown face with hair effect on the face on consumption wherein the stick container is provided with a push-up plunger;
Figure 5 shows in longitudinal section an alternative holding device with a screw and a corresponding shredded tube and the ice cream body;
Figure 6 and example 3 show a method of manufacture of a packaged composite frozen confection.

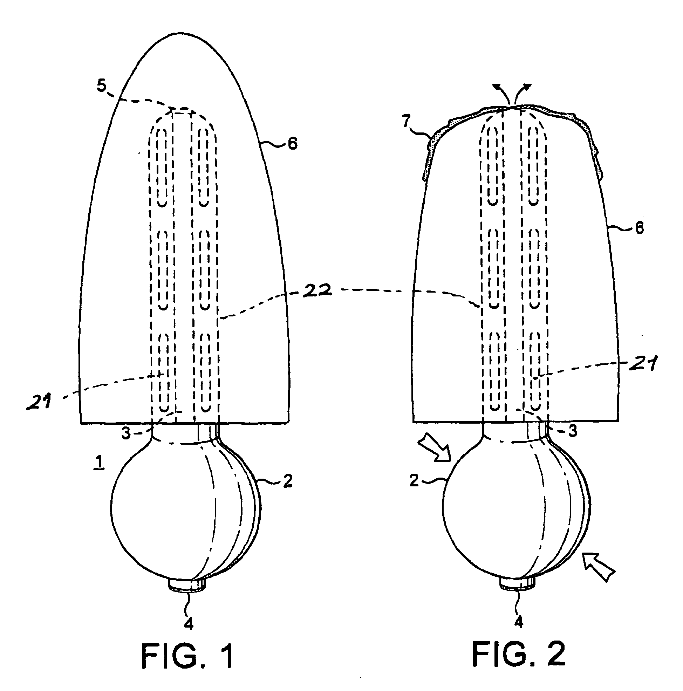

Referring now to figure 1 there is shown a composite frozen confection. A stick container 1 made of one piece of blow-moulded polyethylene comprises a container 2 and a hollow tube 3. The stick container 1 is filled with a sauce of the following composition:

| Chocolate Sauce | % |
|---|---|
| - Invert Sugar | 93.00 |
| - Water | 5.17 |
| - Cocoa Powder | 1 |
| - Chocolate Flavour | 0.03 |
| - Caramel Colour | 0.80 |
| | 100 |

which is liquid at temperatures higher or equal than -25°C.

In the filling step of the container 2, the tube 3 is closed at its bottom with a plastic plug 4 and at its top with a plug 5 made of chocolate.

A body 6 of frozen confection is made by filling a mould with an ice cream of standard composition, inserting the filled stick container 1 and freezing in a refrigerated environment.

As shown in figure 2, after the first lick or the first bite, the consumer squeezes the flexible container 2 and dispenses the sauce 7 that flows over the frozen confection body 6.

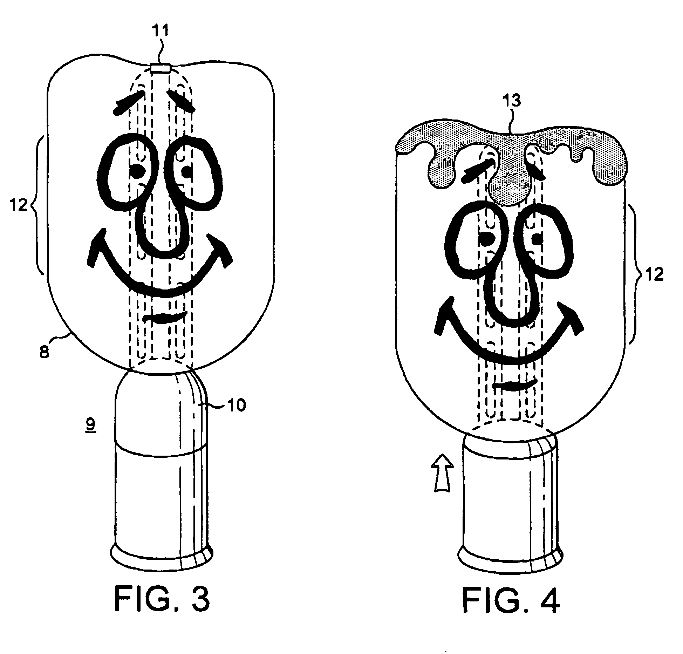

Referring to figure 3, a body of frozen confection 8 is extruded vertically. A stick container 9 in the form of a push-up stick in two parts made of injection-molded polypropylene is filled with a sauce 10, closed with a chocolate plug 11 and inserted horizontally into the center of the frozen confection extrudate at regular intervals, which is cut into slices. The frozen confection slice with the stick inserted herein is going on a conveyor plate.

A design 12 figuring a clown face is printed on the surface of the slice using chocolate as printing ink. After hardening in a tunnel the product is packed in a flow-wrap.

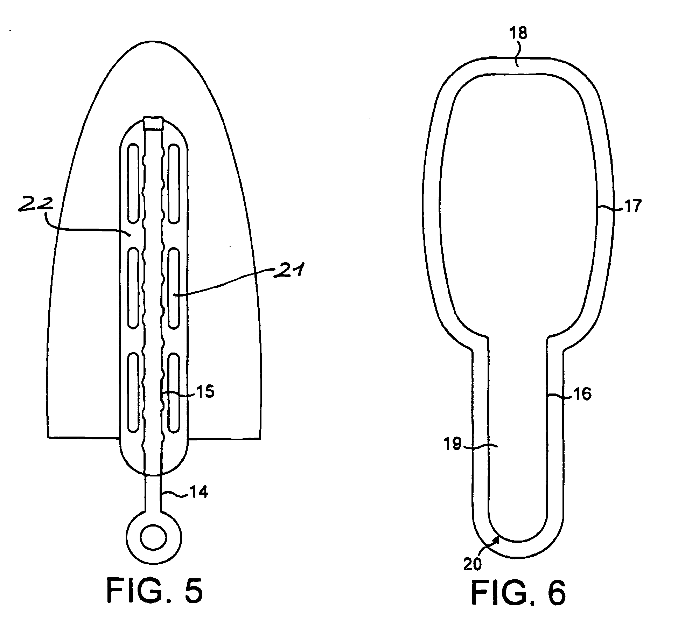

As indicated in figures 3, 4, after the first lick or the first bite and taken away the plug the consumer acts on the hollow push-up tube and forces the sauce out of the stick container, which sauce flows down from the top to figure a hair 13 of the clown face. As alternative to the shown slidable plunger, one may use a screw 14 as shown in figure 5 that can liberate the dessert component in a corresponding threaded tube 15.

In figure 6 a packed in-pack is provided by a thermoform-fill-seal method,
wherein a first internal cavity 16 and a second external cavity 17 are formed by two polyethylene sheets peelably sealed together along a contour sealing 18, a hollow plastic tube 19 is inserted in the cavity 16, a liquid sauce 20
is filled into the cavity 16 through the hollow tube 19 and the tube 19 is closed by sealing . The second cavity 17 is then filled with a water ice composition, the sheets are sealed together and cut and the product is hardened in a refrigerated or freezing environement.

For consumption, the packaging is opened through the edges, the sauce is ejected from the pack by squeezing, twisting or another method and pushed at the surface of the frozen body, creating a visual effect.

For ice lolly manufacturing the filled stick container is inserted into the ice cream body (made by extrusion or moulding). The stick container comprising the container 2,10 and a tail 22 is anchored into the ice cream body with the aid of holes 21 in the tail 22; ribs on the external surface of the stick tail can fulfill the same anchoring function.

As an alternative embodiment the stick container may be filled with the liquid dessert component during the frozen confection moulding process and in this latter case the frozen confection itself serves to close the stick container at its tail end.

## Claims

1. Holding device for a frozen confection in the form of a stick container (1) filled with a dessert component that is liquid at low negative temperature, wherein the stick container (1) is closed by a closure element or a closure mechanism which can be an intermediate or a final closure, edible or non-edible and wherein the stick container is capable of dispensing the dessert component (7) on the surface of the frozen confection by reducing the internal volume of the stick container after removal of the closure element or opening the closure mechanism.

2. Holding device according to claim 1, where parts of the holding device may be of flexible or rigid food grade non-edible material or edible material.

3. Holding device according to claim 2, wherein the nonedible materials preferably include plastics such as polypropylene or polyethylene.

4. Holding device according to claim 2, with any edible material with as example a sugar confectionery, preferably a liquorice, a chewing gum, a chocolate coated hard candy, a pastry, a chocolate coated biscuit tube.

5. Holding device according to claim 1, comprising a hollow element which has a bulb part which serves as a container for the dessert component which is to be dispensed and may be a flexible pouch or balloon (2) or a rigid plastic container of any foodgrade material.

6. Holding device according to claim 1, which comprises one, two or three parts or more which may be assembled together in the case of several parts.

7. Holding device according to claim 1, wherein the dessert component is a sauce, a syrup, a jelly, honey, an alcohol, a carbonated or fizzy drink or a mousse and the dessert component may additionally contain inclusions which are dry inclusions, coated dry inclusions, coated wet inclusions with fruit, nuts, grains or part of them, chocolate or sugar confectionery, cereals.

8. Composite frozen confection comprising:
- a frozen confection holding device in the form of a stick container (1) filled with a dessert component that is liquid at low negative temperature and wherein said stick container is capable of dispensing the dessert component by variation of its internal volume, and
- a body of frozen confection (6) which is supported by the stick filled with the dessert component and in which the stick is anchored.

9. Composite frozen confection according to claim 8, wherein the dessert component is formulated to have specific rheological and mechanical properties, Prefered dessert components present particularly reduced freezing / melting temperatures that are sufficiently low that the said dessert is liquid at low negative temperatures and ready to be expressed in tasting at exit of the cabinet freezer.

10. Composite frozen confection according to claim 8, wherein the dessert component presents a Melting Temperature Range as measured by DSC, Cristallization - Melting Isotherm Tests of -16 to -40° C, preferably from -20 to -35° C.

11. Composite frozen confection according to claim 8, wherein the dessert component presents mechanical properties that does not show or shows low dilatation-contraction properties in an extended range of temperatures, preferably from +20 to -40° C.

12. Composite frozen confection according to claim 8, wherein the dessert component is a sauce or syrup which contains by weight:
- 0 to 20 % water, more preferably 0 to 10%,
- 30 to 95 % carbohydrates, preferably 55 to 95% and more preferably 70 to 95%,
- 0 to 20 % flavour preparations,
- 0 to 2 % natural flavour,
- 0 to 1 % colorant,
- 0 to 5% freezing point depressing agent,
- 0 to 1% stabiliser / emulsifyer agent.

13. Method for the manufacture of a composite frozen confection as described in claim 8 which comprises:
- providing a first internal cavity and a second external cavity in a packaging plastic material by thermoforming,
- providing a hollow tube inside the internal cavity of the package,
- filling the first cavity with the liquid dessert component,
- filling the second cavity with a composition to be frozen,
- sealing the outer thermoformed layers to close both cavities,
- freezing the packaged product.

14. Method for the manufacture of a composite frozen confection as described in claim 8 which comprises:
- providing an internal cavity in a packaging plastic material by thermoforming, blow- or injection molding or any other production mechanism,
- filling the cavity with the liquid dessert component,
- closing one side of the cavity by means of heat or other sealing mechanisms or by using a second component that is fixed on one side of the cavity, whereas the other side of the cavity is closed by the frozen confection,
- freezing the packaged product.

15. Method for producing a visual effect on a frozen confection upon consumption which comprises expelling a liquid dessert composition (7) which is liquid at low negative temperature from a stick container by reducing the internal volume of the container and which can be a flow effect on the frozen confection surface (6) like a volcano; a hair effect over a clown face; a product expansion by effervescence on the surface of the frozen confection; a dispersion of solid additions at the surface of the frozen confection or a combination of the above effects.

16. Method for dispensing a liquid dessert component (7) which is liquid at low negative temperature over and around the surface of a frozen confection (6) comprising a holding device in the form of a stick container which comprises squeezing the stick container, pushing a plunger, using a telescopic stick to collapse, screwing or twisting a closure of the stick, turning a stick part, blowing, sucking or using of heat transfer, eating an edible stick part, or any combinaison of these methods.

## Patentansprüche

1. Haltevorrichtung für eine gefrorene Süßware in Form eines Stielbehälters (1), der mit einem Dessertbestandteil gefüllt ist, der bei einer niedrigen negativen Temperatur flüssig ist, wobei der Stielbehälter (1) von einem Verschlusselement oder einem Verschlussmechanismus verschlossen ist, die ein intermediärer oder endgültiger Verschluss sein können, essbar oder nicht-essbar, und wobei der Stielbehälter in der Lage ist, den Dessertbestandteil (7) auf die Oberfläche der gefrorenen Süßware dadurch abzugeben, dass das Innenvolumen des Stielbehälters nach der Entfernung des Verschlusselements oder nach dem Öffnen des Verschlussmechanismus vermindert wird.

2. Haltevorrichtung nach Anspruch 1, wobei Teile der Haltevorrichtung aus einem flexiblen oder starren nicht-essbaren Material oder essbaren Material von Lebensmittelqualität sein können.

3. Haltevorrichtung nach Anspruch 2, wobei die nicht-essbaren Materialien vorzugsweise Kunststoffe wie Polypropylen oder Polyethylen einschließen.

4. Haltevorrichtung nach Anspruch 2 mit irgendeinem essbaren Material mit beispielsweise einer Zuckersüßware, vorzugsweise einem Lakritz, einem Kaugummi, einer schokoladeüberzogenen Hartkaramelle, einem Gebäck, einem schokoladeüberzogenen Gebäckrohr.

5. Haltevorrichtung nach Anspruch 1, die ein Hohlelement umfasst, das einen Balgteil umfasst, der als ein Behälter für den Dessertbestandteil dient, der abgegeben werden soll, und der ein flexibler Beutel oder Ballon (2) oder ein starrer Kunststoffbehälter aus irgendeinem Material von Lebensmittelqualität sein kann.

6. Haltevorrichtung nach Anspruch 1, die ein, zwei oder drei Teile oder mehr umfasst, die im Falle von mehreren Teilen zusammenmontiert sein können.

7. Haltevorrichtung nach Anspruch 1, wobei der Dessertbestandteil eine Sauce, ein Sirup, ein Gelee, Honig, ein Alkohol, ein carbonisierter oder sprudelnder Drink oder ein Mousse ist, und wobei der Dessertbestandteil zusätzlich Einschlüsse enthalten kann, die trockene Einschlüsse, überzogene trockene Einschlüsse, überzogene feuchte Einschlüsse mit Früchten, Nüssen, Körnern oder deren Teilen, Schokolade oder Zuckersüßwaren, Cerealien sind.

8. Zusammengesetzte gefrorene Süßware, die umfasst:
- eine Haltevorrichtung für die gefrorene Süßware in Form eines Stielbehälters (1), der mit einem Dessertbestandteil gefüllt ist, der bei einer niedrigen negativen Temperatur flüssig ist, und wobei der Stielbehälter in der Lage ist, den Dessertbestandteil bei Veränderung seines Innenvolumens abzugeben, und
- einen Körper aus einer gefrorenen Süßware (6), der von dem Stiel getragen wird, der mit dem Dessertbestandteil gefüllt ist, und in dem der Stiel verankert ist.

9. Zusammengesetzte gefrorene Süßware nach Anspruch 8, wobei der Dessertbestandteil so formuliert ist, dass er spezifische rheologische und mechanische Eigenschaften aufweist, wobei bevorzugte Dessertbestandteile speziell abgesenkte Gefrier/Schmelztemperaturen aufweisen, die ausreichend niedrig sind, so dass das genannte Dessert bei einer niedrigen negativen Temperatur flüssig ist und leicht zum Genießen beim Verlassen eines Gefrierfachs herausgedrückt werden kann.

10. Zusammengesetzte gefrorene Süßware nach Anspruch 8, wobei der Dessertbestandteil einen Schmelztemperaturbereich, gemessen durch DSC Kristallisations-Schmelzisothermen-Tests, von -16 bis -40 °C, vorzugsweise von -20 bis -35 °C, aufweist.

11. Zusammengesetzte gefrorene Süßware nach Anspruch 8, wobei der Dessertbestandteil mechanische Eigenschaften aufweist, die keine oder geringfügige Ausdehnungs-Schrumpfeigenschaften über einen ausgedehnten Temperaturbereich von vorzugsweise +20 bis -40 °C zeigen.

12. Zusammengesetzte gefrorene Süßware nach Anspruch 8, wobei die Dessertkomponente eine Sauce oder ein Sirup ist, die in Gewicht enthalten:
- 0 bis 20% Wasser, stärker bevorzugt 0 bis 10%,
- 30 bis 95% Kohlenhydrate, vorzugsweise 55 bis 95% und stärker bevorzugt 70 bis 95%,
- 0 bis 20% Aromazusammensetzungen,
- 0 bis 2% natürliches Aroma,
- 0 bis 1% Färbemittel,
- 0 bis 5% gefrierpunktserniedrigendes Mittel,
- 0 bis 1% Stabilisator/Emulgator.

13. Verfahren zur Herstellung einer zusammengesetzten gefrorenen Süßware, wie sie in Anspruch 8 beschrieben wird, das umfasst:
- Bereitstellen eines ersten inneren Hohlraums und eines zweiten äußeren Hohlraums in einem Verpackungsmaterial durch thermische Verformung,
- Bereitstellen eines hohlen Rohrs innerhalb des inneren Hohlraums der Verpackung,
- Füllen des ersten Hohlraums mit dem flüssigen Dessertbestandteil,
- Füllen des zweiten Hohlraums mit einer zu gefrierenden Zusammensetzung,
- Verschließen der äußeren thermisch geformten Schichten zum Verschließen beider Hohlräume,
- Gefrieren des verpackten Produkts.

14. Verfahren zur Herstellung einer zusammengesetzten gefrorenen Süßware, wie sie in Anspruch 8 beschrieben wird, das umfasst:
- Bereitstellen eines inneren Hohlraums in einem Verpackungs-Kunststoffmaterial durch thermische Verformung, Blasformen oder Spritzgießen oder durch irgendeinen anderen Produktionsmechanismus,
- Füllen des Hohlraums mit dem flüssigen Dessertbestandteil,
- Verschließen einer Seite des Hohlraums durch Hitze oder andere Verschlussmechanismen, oder unter Verwendung eines zweiten Bestandteils, der an einer Seite des Hohlraums befestigt wird, während die andere Seite des Hohlraums durch die gefrorene Süßware verschlossen wird,
- Gefrieren des verpackten Produkts.

15. Verfahren zur Erzeugung eines visuellen Effekts auf einer gefrorenen Süßware beim Verzehr, das das Herausdrücken einer flüssigen Dessertzusammensetzung (7), die bei einer niedrigen negativen Temperatur flüssig ist, aus einem Stielbehälter dadurch umfasst, dass das Innenvolumen des Behälters vermindert wird, und der ein Fließeffekt auf der Oberfläche (6) der gefrorenen Süßware sein kann, wie beispielsweise ein Vulkan; ein Haareffekt über einem Clownsgesicht; eine Produktexpansion durch Aufschäumen auf der Oberfläche der gefrorenen Süßware; eine Dispersion von festen Zusätzen auf die Oberfläche der gefrorenen Süßware oder eine Kombination der obigen Effekte.

16. Verfahren zur Abgabe eines flüssigen Dessertbestandteils (7), der bei einer niedrigen negativen Temperatur flüssig ist, über und um die Oberfläche einer gefrorenen Süßware (6), die eine Haltevorrichtung in Form eines Stielbehälters aufweist, das das Zusammendrücken des Stielbehälters, das Verschieben eines Kolbens, die Verwendung eines Teleskopstabs zum Kollabieren, das Schrauben oder Verdrehen eines Verschlusses des Stiels, das Drehen eines Stielteils, das Blasen, Saugen oder die Verwendung irgendeiner Wärmeübertragung, das Essen eines essbaren Stielteils oder irgendeine Kombination dieser Verfahren umfasst.

## Revendications

1. Dispositif de maintien pour une confiserie glacée sous la forme d'un récipient (1) à bâtonnet rempli d'un constituant de dessert qui est liquide à une basse température négative, dans lequel le récipient (1) à bâtonnet est fermé par un élément de fermeture ou un mécanisme de fermeture qui peut être une fermeture intermédiaire ou finale, comestible ou non comestible, et dans lequel le récipient à bâtonnet est capable de distribuer le constituant (7) de dessert sur la surface de la confiserie glacée en réduisant le volume interne du récipient à bâtonnet après l'enlèvement de l'élément de fermeture ou l'ouverture du mécanisme de fermeture.

2. Dispositif de support selon la revendication 1, dans lequel des parties du dispositif de support peuvent être en une matière non comestible de qualité alimentaire ou une matière comestible, flexible ou rigide.

3. Dispositif de support selon la revendication 2, dans lequel des matières non comestibles comprennent avantageusement des matières plastiques telles que du polypropylène ou du polyéthylène.

4. Dispositif de support selon la revendication 2, pourvu de toutes matières comestibles telles que, par exemple, une confiserie sucrée, de préférence une réglisse, une gomme à mâcher, un bonbon dur enrobé de chocolat, une pâtisserie, un tube de biscuit enrobé de chocolat.

5. Dispositif de support selon la revendication 1, comportant un élément creux qui comporte une partie formant une ampoule servant de récipient pour le constituant de dessert qui doit être distribué et qui peut être une poche ou un ballonnet flexible (2) ou un récipient en matière plastique rigide en n'importe quelle matière de qualité alimentaire.

6. Dispositif de support selon la revendication 1, qui comporte une, deux ou trois pièces ou plus qui peuvent être assemblées les unes aux autres dans le cas de plusieurs pièces.

7. Dispositif de support selon la revendication 1, dans lequel le constituant de dessert est une sauce, un sirop, une gelée, du miel, un alcool, une boisson gazeuse ou effervescente ou une mousse et le constituant de dessert peut contenir en outre des inclusions qui sont des inclusions sèches, des inclusions sèches enrobées, des inclusions humides enrobées avec des fruits, des amandes, des grains ou une partie de ceux-ci, du chocolat ou une confiserie au sucre, des céréales.

8. Confiserie glacée composite comprenant :
- un dispositif de support de confiserie glacée sous la forme d'un récipient à bâtonnet (1) rempli d'un constituant de dessert qui est liquide à une basse température négative, ledit récipient à bâtonnet étant capable de distribuer le constituant de dessert par variation de son volume interne, et
- un corps de confiserie glacée (6) qui est supporté par le bâtonnet rempli du constituant de dessert et dans lequel le bâtonnet est accroché.

9. Confiserie glacée composite selon la revendication 8, dans laquelle le constituant de dessert est formulé de façon à avoir des propriétés rhéologiques et mécaniques spécifiques, des constituants de dessert préférés présentant des températures de congélation / fusion particulièrement réduites qui sont suffisamment basses pour que le dessert soit liquide à de basses températures négatives et prêt à être exprimé lorsqu'il est goûté en sortie du congélateur.

10. Confiserie glacée composite selon la revendication 8, dans laquelle le constituant de dessert présente une plage de températures de fusion telles que mesurées par DSC, essais isothermes de cristallisation-fusion de -16 à -40°C, avantageusement de -20 à -35°C.

11. Confiserie glacée composite selon la revendication 8, dans laquelle le constituant de dessert présente des propriétés mécaniques qui ne montrent pas ou montrent de faibles propriétés de dilatation-contraction dans une plage étendue de températures, avantageusement de +20 à -40°C.

12. Confiserie glacée composite selon la revendication 8, dans laquelle le constituant de dessert est une sauce ou un sirop qui contient, en poids :
- 0 à 20 % d'eau, plus avantageusement 0 à 10 %,
- 30 à 95 % de glucides, avantageusement 55 à 95 % et plus avantageusement 70 à 95 %,
- 0 à 20 % de préparations aromatiques,
- 0 à 2 % d'arôme naturel
- 0 à 1 % de colorant,
- 0 à 5 % d'agent d'abaissement du point de congélation,
- 0 à 1 % d'agent stabilisant / émulsifiant.

13. Procédé pour la fabrication d'une confiserie glacée composite tel que décrit dans la revendication 8, qui comprend :
- la formation par thermoformage d'une première cavité interne et d'une seconde cavité externe dans une matière plastique d'emballage,
- la mise en place d'un tube creux à l'intérieur de la cavité interne de l'emballage,
- le remplissage de la première cavité avec le constituant de dessert liquide,
- le remplissage de la seconde cavité avec une composition devant être congelée,
- le scellement des couches thermoformées extérieures pour fermer les deux cavités,
- la congélation du produit emballé.

14. Procédé pour la fabrication d'une confiserie glacée composite selon la revendication 8, qui comprend :
- la réalisation d'une cavité interne dans une matière plastique d'emballage par thermoformage, moulage par soufflage ou par injection ou tout autre mécanisme de production,
- le remplissage de la cavité avec le constituant de dessert liquide,
- la fermeture d'un côté de la cavité au moyen de chaleur ou d'autres mécanismes de scellement ou par l'utilisation d'un second constituant qui est fixé sur un côté de la cavité, alors que l'autre côté de la cavité est fermé par la confiserie glacée,
- la congélation du produit emballé.

15. Procédé pour la production d'un effet visuel sur une confiserie glacée au moment de la consommation qui comprend l'expulsion d'une composition de dessert liquide (7) qui est liquide à une basse température négative, depuis un récipient à bâtonnet, par réduction du volume interne du récipient et qui peut être un effet d'écoulement sur la surface (6) de la confiserie glacée, analogue à un volcan ; un effet de cheveu sur un visage de clown ; une expansion du produit par effervescence sur la surface de la confiserie glacée ; une dispersion d'additions solides à la surface de la confiserie glacée ou une combinaison des effets ci-dessus.

16. Procédé pour distribuer un constituant de dessert liquide (7), qui est liquide à une basse température négative, sur et autour de la surface d'une confiserie glacée (6) comportant un dispositif de support sous la forme d'un récipient à bâtonnet, qui comprend le fait de presser le récipient à bâtonnet, de pousser sur un plongeur, d'utiliser un bâtonnet télescopique pour l'enfoncer, de visser ou de tourner une fermeture du bâtonnet, de faire tourner une partie du bâtonnet, de souffler, d'aspirer ou d'utiliser un transfert de chaleur, de manger une partie du bâtonnet comestible, ou des combinaisons quelconques de ces procédés.
